# EUROPÄISCHE PATENTSCHRIFT

(11) **EP 1 776 893 B1**
(45) Veröffentlichungstag und Bekanntmachung des Hinweises auf die Patenterteilung: **16.01.2013**
(21) Anmeldenummer: 06025913.2
(22) Anmeldetag: 31.01.2001
(51) Int. Cl.: A46B 3/08, A46D 3/08, A46B 9/04

(54) **Bürstenkopf und Verfahren zur Herstellung eines solchen Bürstenkopfs**
Brush head and method for its production
Tête de brosse et procédé pour la fabrication de cette tête de brosse

(30) Priorität: 25.03.2000 DE 10015062
(43) Veröffentlichungstag der Anmeldung: 25.04.2007
(62) Teilanmeldung aus: 01102078.1
(73) Patentinhaber: Braun GmbH, 61476 Kronberg (DE)
(72) Erfinder: Driesen, Georges, 61276 Weilrod (DE); Fritsch, Thomas, 65817 Eppstein (DE); Schwarz-Hartmann, Armin, 55234 Wendelsheim (DE)

(56) Entgegenhaltungen:
- WO-A-94/27467
- DE-A- 4 224 903
- DE-A- 19 519 291
- DE-A- 19 545 030

## Beschreibung

Die vorliegende Erfindung betrifft einen Bürstenkopf, insbesondere einen Zahnbürstenkopf, mit einem Borstenträger und daran festgelegten Borsten, wobei der Borstenträger eine langgestreckte Ausnehmung aufweist, in der eine Vielzahl von Borsten sitzen und ein langgestrecktes Borstenbüschel mit geschlossener, glatter Außenkontur bilden, die im wesentlichen der Kontur der langgestreckten Ausnehmung entspricht.

Die vorliegende Erfindung betrifft ferner ein Verfahren zur Herstellung eines solchen Bürstenkopfes, bei dem ein Borstenträger bereitgestellt wird und eine Vielzahl von Borsten an diesem befestigt werden.

Borstenbüschel können in verschiedener Weise an Borstenträgern von Zahnbürsten befestigt werden. Ein erstes Verfahren besteht darin, daß ein Borstenbüschel in U-Form gelegt wird und mit Hilfe eines kleinen Ankerplättchens aus Metall, das zwischen die Schenkel des U-förmigen Borstenbüschels gelegt wird, in eine im Borstenträger vorgesehene Sacklochbohrung gestopft und dort befestigt wird. Das Ankerplättchen liegt über der U-förmigen Biegung des Borstenbüschels und gräbt sich in gegenüberliegende Seitenwände der Sacklochbohrung ein. Mit diesem sogenannten Ankerstopfverfahren können jedoch überwiegend Borstenbüschel einfacher Geometrien, insbesondere mit kreisförmigem oder quadratischem Querschnitt befestigt werden (vgl EP 0 700 259 B1).

Ein zweites Verfahren zur Festlegung der Borsten an dem Borstenträger besteht darin, daß die Borstenbüschel durch Umspritzen mit dem Material des Borstenträgers festgelegt werden (vgl EP 0 678 368 B1). Mit dieser Methode können Borstenbüschel praktisch beliebigen Querschnitts und auch beliebiger Größe an dem Borstenträger befestigt werden.

Gemäß einer dritten Methode werden die Borstenbüschel in eine Kunststofflochplatte eingeführt, die dem freien Ende der Borstenbüschel gegenüberliegenden Borstenenden mittels eines Prägestempels auf der Unterseite der Lochplatte miteinander verschweißt und wird die Lochplatte mit den daran befestigten Borstenbüscheln mit Material umspritzt, verklebt oder auch lösbar an einem Borstenträger befestigt (vgl WO 99/55194). Auch hierbei sind Borstenbüschel mit variablen Querschnittsgeometrien erhältlich, allerdings ist das thermische Verschweißen der Borsten ebenso wie das zuvor beschriebene Eingießen bzw. Umspritzen relativ aufwendig und daher kostenintensiv im Vergleich zum Ankerstopfverfahren.

Ein Zahnbürstenkopf der eingangs genannten Art ist aus der US 5,446,940 bekannt, bei dem der Borstenträger mehrere langlochartige Ausnehmungen aufweist, in denen jeweils ein langgestrecktes Borstenbüschel mit geschlossener, glatter Außenkontur sitzt. Da es jedoch schwierig ist, die langlochartigen Ausnehmungen mit Borsten zu befüllen und diese alle in eine senkrechte Ausrichtung zu bringen, ist in der US 5,446,940 vorgeschlagen, die langlochartige Ausnehmung durch mehrere in Reihe hintereinander angeordnete Löcher mit kreisförmigem oder rechteckigem Querschnitt zu ersetzen und in jedem dieser Löcher ein separates Borstenbüschel zu befestigen. Hierdurch wird jedoch kein einzelnes langgestrecktes Borstenbüschel mit geschlossener Außenkontur, sondern nur noch eine Reihe singulärer, hintereinander angeordneter Borstenbüschel erhalten. Weiter ist die Dimensionierung des Langloches durch die verwendeten Ankerplatten eingeschränkt.

Auch ist es bereits bekannt, mehrere kreisförmige Borstenbüschel in Reihe hintereinander anzuordnen, wobei die äußeren Borstenbüschel nach innen geneigt sein können. Um eine ungehinderte Bewegung der einzelnen Borstenbüschel zu ermöglichen, sollen nach dieser Druckschrift alle Borstenbüschel voneinander großzügig beabstandet sein. Ein gegenseitiges Abstützen der einzelnen Borstenbüschel soll verhindert werden.

Dokument DE 195 45 030 A offenbart einen Bürstenkopf gemäss dem Oberbegriff von Anspruch 1.

Der vorliegenden Erfindung liegt die Aufgabe zugrunde, einen verbesserten Bürstenkopf der eingangs genannten Art sowie ein verbessertes Verfahren der eingangs genannten Art zu dessen Herstellung zu schaffen, die aus dem Stand der Technik bekannte Nachteile vermeiden und letzteren in vorteilhafter Weise weiterbilden. Insbesondere soll die Herstellbarkeit eines Bürstenkopfes mit einem langgestreckten Borstenbüschel mit geschlossener Kontur verbessert und kosteneffizienter gestaltet werden.

Bei einem Bürstenkopf der eingangs genannten Art wird diese Aufgabe erfindungsgemäß dadurch gelöst, daß die langgestreckte Ausnehmung mittels zumindest einer Querwand in mehrere Segmente unterteilt ist, in jedem der Segmente ein separates Borstenbüschel sitzt und die zumindest eine Querwand derart ausgebildet ist, daß die separaten Borstenbüschel ineinander übergehen und gemeinsam das langgestreckte Borstenbüschel mit geschlossener, glatter Außenkontur bilden.

Es sind also keine vollständig separaten, lediglich in Reihe angeordneten Einzelbüschel vorgesehen. Die Borstenbüschel sind an ihren Befestigungsenden separat zusammengefaßt und befestigt, zu ihren freien Enden hin, mit denen die Zähne geputzt werden, laufen die Borsten zusammen, so daß sie ein gemeinsames, langgestrecktes Borstenbüschel bilden und die Trennung in separate Borstenbüschel nicht mehr sichtbar ist. Dies ist für die Putzwirkung und das Verschleißverhalten der Bürsten wichtig.

Hierzu ist die langlochartige Ausnehmung derart ausgebildet, daß jedes Segment gegenüberliegende, von der zumindest einen Querwand verbundene Seitenwände besitzt, die symmetrisch zur Längsachse der langlochartigen Ausnehmung insbesondere parallel zueinander verlaufen. Die Seitenwände aneinander angrenzender Segmente gehen kontinuierlich bzw. stetig und lediglich von der Querwand unterbrochen ineinander über. Die Querwände geben der Befestigung der Borsten Stabilität gegenüber einer Bewegung der Borsten in Längsrichtung der Ausnehmung. Sie erleichtern eine Befestigung der Borsten nach dem herkömmlichen Ankerstopfverfahren wesentlich bzw. sind unter Umständen je nach Geometrie der Ausnehmung sogar Voraussetzung für die Anwendung dieses Verfahrens.

In Weiterbildung der Erfindung können die Borsten eines jeden separaten Borstenbüschels U-förmig in dem jeweiligen Segment sitzen und von einem in dem jeweiligen Segment verankerten, vorzugsweise plattenförmigen Anker gehalten sein. Der Anker kann sich zwischen den Schenkeln der U-förmig gebogenen Borsten über deren Verbindungsabschnitte erstrecken und diese am Boden der langlochförmigen Ausnehmung halten. Die Borsten brauchen also nicht eingegossen, eingeklebt oder eingeschweißt zu werden. Sie können mit einem separaten Anker form- und kraftschlüssig an dem Borstenträger verankert sein. Ein derart ausgebildeter Bürstenkopf ist gegenüber herkömmlichen Bürstenköpfen mit langgestreckten Borstenbüscheln beträchtlich kostengünstiger herstellbar.

Die in den jeweiligen Segmenten vorgesehenen Anker zur Verankerung der Borstenbüschel können verschieden angeordnet sein. Gemäß einer bevorzugten Ausführung der Erfindung erstrecken sich die Anker im wesentlichen quer zur Längsachse der langlochartigen Ausnehmung, also im wesentlichen oder fast parallel zu der jeweils benachbarten Querwand des jeweiligen Segments. Vorzugsweise schließt der Anker zur jeweils benachbarten Querwand einen Winkel von weniger als 30 Grad ein. Die Längsachse der langlochartigen Ausnehmung ist im Kontext der vorliegenden Erfindung nicht zwangsweise gerade, vielmehr kann die Längserstreckung der langlochartigen Ausnehmung an die Gegebenheiten des jeweiligen Bürstenkopfes angepaßt sein, insbesondere einen gekrümmten oder geknickten Verlauf haben, so daß zwischen dem Anker und der jeweils benachbarten Querwand des jeweiligen Segments ein Winkel eingeschlossen sein kann.

Durch die Ausrichtung der Anker im wesentlichen quer zur Längsachse der langlochartigen Ausnehmung können sich die Borstenbüschel in dem jeweiligen Segment dessen Kontur bestmöglich anpassen. Die in den verschiedenen Segmenten verankerten Büschel bilden besonders vorteilhaft die gewünschte geschlossene Kontur des langgestreckten Borstenbüschels.

Die zumindest eine Querwand in der langlochartigen Ausnehmung kann in verschiedener Art und Weise ausgebildet sein. Eine bevorzugte Ausführung der Erfindung besteht darin, daß als Querwand ein separat ausgebildeter Quersteg vorgesehen ist, der am Borstenträger verankert ist. Vorzugsweise kann ein dünner Metallsteg vorgesehen sein, der in gegenüberliegenden Seitenwänden der langlochartigen Ausführung verankert ist. Insbesondere kann als Querwand ein Ankerdraht bzw. eine Ankerplatte in die langlochartige Ausnehmung eingeschossen sein, wie sie üblicherweise zur Befestigung der Borsten verwendet wird. Um als Querwand zu dienen, wird die Ankerplatte oder eine vergleichbare Platte jedoch vorab ohne Borsten in die langlochartige Ausnehmung eingebracht, so daß anschließend das jeweilige Borstenbüschel in das bereits entstandene Segment eingebracht werden kann. Die Höhe der Querwände vom Boden der langlochartigen Ausnehmung kann sich von der Höhe der Anker, mit denen die Borstenbüschel verankert sind, unterscheiden.

Um die Beabstandung der einzelnen Borstenbüschel bereits an ihren befestigungsseitigen Enden so gering wie möglich zu halten, beträgt die Dicke der zumindest einen Querwand vorzugsweise weniger als 0,5 mm, insbesondere 0,3 mm oder weniger. Gemäß einer bevorzugten Ausführung der Erfindung besitzt die Querwand eine Dicke im Bereich von etwa 0,15 bis 0,3 mm. Hierdurch kann ein langgestrecktes Borstenbüschel mit großer Dichte und Geschlossenheit erreicht werden. Trotz der geringen Dicke der aus Metall bestehenden Querwand, bietet diese eine ausreichende Stabilität zur Verankerung der Borstenbüschel mittels des Ankerstopfverfahrens in den Segmenten.

Um ein Abreißen bzw. Abknicken der Borsten beim Einstopfen in die Segmente zu verhindern, ist die Querwand frei von scharfen Kanten ausgebildet. Insbesondere ist die zur Außenseite der langlochartigen Ausnehmung hin gerichtete Oberkante der Querwand abgerundet. Die Querwand kann auch insgesamt einen ovalen bzw. elliptischen Querschnitt besitzen.

Gemäß einer anderen Ausführung der Erfindung ist die zumindest eine Querwand integral einstückig mit dem Borstenträger ausgebildet. Vorzugsweise besteht sie zusammen mit dem Borstenträger aus spritzgegossenem Kunststoff und ist an diesen angeformt. Um trotz entsprechend größerer Querwanddicke der Kunststoffwand, die bei gleicher Dicke eine geringere Stabilität als die vorerwähnte metallische Querwand besitzt, die Borstenbüschel separater Segmente zu einem gemeinsamen Borstenbüschel zusammenstehen zu lassen, sind gegenüberliegende Seiten der zumindest einen Querwand zueinander geneigt, derart, daß die in benachbarten Segmenten sitzenden Borstenbüschel mit ihren freien Enden aufeinander zu geneigt sind. Die Borstenbüschel bilden also auch hier zumindest in ihren zu den freien Enden der Borsten hin liegenden Bereichen einen gemeinsamen, insgesamt langgestreckten Borstenbüschel mit geschlossener, glatter Außenkontur, so daß der Eindruck entsteht, es sei ein einziges langgestrecktes Borstenbüschel in der langlochartigen Aufnahme befestigt.

Die zumindest eine Querwand ist insbesondere keilförmig ausgebildet. Ihr Querschnitt verjüngt sich vom Boden der langlochartigen Ausnehmung zur Außenseite hin. Es kann eine einzige Seite der Querwand zur Senkrechten auf die Oberseite des Borstenträgers geneigt sein. Es können auch beide Seiten der Querwand entsprechend geneigt sein oder bei verschiedenen Querwänden auch Kombinationen der oben genannten Lösungen vorkommen.

In Weiterbildung der Erfindung können außenliegende Segmente der langlochartigen Ausnehmung insgesamt nach innen hin zu einem mittleren Segment geneigt sein. Bei dieser Ausführung sind also nicht nur innere Wandungen der äußeren Segmente, das heißt die jeweiligen Seiten der zugehörigen Querwand, sondern auch die stirnendseitigen Wände der langlochartigen Ausnehmung sowie gegebenenfalls der Boden der langlochartigen Ausnehmung in diesem Segment geneigt angeordnet, so daß die darin aufgenommenen Borstenbüschel sich zu dem mittleren Borstenbüschel hin neigen. Hierdurch wird eine Auffächerung der in den äußeren Segmenten befestigten Borstenbüschel vermieden und eine große Dichte auch in diesem Bereich erreicht. In einer vorteilhaften Weitergestaltung sind die Borstenbüschel der einzelnen Segmente mit unterschiedlichen Winkeln oder Richtungen bezogen auf die Senkrechte zur Oberseite geneigt. Bei dieser Konfiguration wird die Fläche der Bürstenscheibe optimal ausgenutzt, da bei herkömmlichen Bestopfungen mit getrennten Löchern die Anzahl der Borstenbüschel deutlich geringer ist.

Im Hinblick auf eine einfache Herstellbarkeit ist jedoch die zuvor beschriebene Ausführung mit nur geneigten Wänden der Querwand bevorzugt, da sich die Ausformung entsprechender Spritzgußwerkzeuge einfacher gestaltet.

In Weiterbildung der Erfindung können die Segmente im wesentlichen dieselbe Grundfläche besitzen, so daß das insgesamt langgestreckte Borstenbüschel eine gleichmäßige Dichte und Struktur erhält.

Um eine kaskadenartige Anordnung der Borsten innerhalb eines langgestreckten Borstenbüschels zu erreichen, können die Segmente verschiedene Grundflächen besitzen. In den verschiedenen Segmenten kann jeweils eine verschiedene Anzahl von Borsten sitzen. Es können in den verschiedenen Segmenten auch verschiedenartige Borsten sitzen. Es können Borsten unterschiedlicher Borstenlänge, Borstenstruktur, -material, -steifigkeit, -durchmesser oder -farbe verwendet werden.

Die Segmente können verschiedenartige Konturen besitzen. Insbesondere besitzen sie eine von der Kreisform verschiedene Kontur, vorzugsweise eine eckige Kontur mit zumindest zwei im wesentlichen parallelen, sich gegenüberliegenden Seiten. Die Segmente können gegebenenfalls auch eine elliptische oder ovale Form besitzen.

Bei einem Verfahren zur Herstellung eines Bürstenkopfes der eingangs genannten Art wird die oben genannte Aufgabe erfindungsgemäß dadurch gelöst, daß in den Borstenträger eine langlochartige Ausnehmung mit zumindest einer Querwand, die die Ausnehmung in mehrere Segmente unterteilt, ausgebildet wird und in jedes Segment ein separates Borstenbüschel eingebracht wird, wobei die zumindest eine Querwand derart ausgebildet wird, daß die separaten Borstenbüschel ineinander übergehen und gemeinsam ein langgestrecktes Borstenbüschel mit geschlossener, glatter Außenkontur bilden.

Insbesondere werden die Borsten im Ankerstopfverfahren in die jeweiligen Segmente der langlochartigen Ausnehmung eingebracht. Die Borsten eines jeden Borstenbüschels werden U-förmig um einen Metallanker gelegt und in dieser U-Form mit dem Metallanker in das jeweilige Segment geschossen. Der Anker wird hierbei in die Seitenwände der langlochartigen Ausnehmung getrieben und darin verankert. Durch das Ankerstopfverfahren können die Borsten billig und mit hoher Geschwindigkeit an dem Borstenträger verankert werden. In Verbindung mit der Unterteilung der langlochartigen Ausnehmung kann kostengünstig und zeiteffizient ein langgestrecktes Borstenbüschel an dem Bürstenkopf vorgesehen werden.

Gemäß einer bevorzugten Ausführung der Erfindung wird die langlochartige Ausnehmung zunächst ohne Querwand ausgebildet. Eine separate Querwand wird nachträglich eingebracht, insbesondere an gegenüberliegenden Seitenwänden der Ausnehmung verankert. Das nachträgliche Einbringen der Querwand bzw. der Querwände besitzt den Vorteil, daß für den Borstenträger und die Querwand unterschiedliche Materialien verwendet werden können, so daß unabhängig voneinander das jeweils passende Material für Borstenträger und Querwand verwendet werden kann. Insbesondere kann als Querwand eine Metallplatte im wesentlichen quer zur Längsachse der langlochartigen Ausnehmung in gegenüberliegende Seitenwände der Ausnehmung eingeschossen werden. Besonders vorteilhaft ist es, als Querwand einen Metallanker, wie er üblicherweise zur Befestigung der Borsten im Ankerstopfverfahren verwendet wird, vorab, das heißt vor dem Einbringen der Borsten in der langlochartigen Ausnehmung zu verankern.

Gemäß einer anderen bevorzugten Ausführung der Erfindung wird die zumindest eine Querwand integral an den Borstenträger angeformt. Insbesondere kann sie aus Kunststoff zusammen mit dem Borstenträger spritzgegossen werden. Gegebenenfalls kann nach dem Spritzgußvorgang eine formgebende Bearbeitung des Borstenträgers wie zum Beispiel Bohren, Fräsen und dergleichen vorgenommen werden, um der Querwand die gewünschte Form zu geben.

Bei beiden beschriebenen Varianten der Ausbildung der Querwand werden die Borstenbüschel jeweils nach der Ausbildung der Querwand in einem folgenden Verfahrensschritt in das jeweilige Segment eingebracht. In Weiterbildung der Erfindung können die Borstenbüschel jeweils in etwa kreisrunder Konfiguration in das jeweilige Segment eingebracht werden. Die Borstenbüschel passen sich dabei automatisch an die jeweilige Kontur des Segments an, das heißt, sie verändern ihre zunächst etwa kreisrunde Querschnittsform in die dem jeweiligen Segment entsprechende Querschnittsform. Insbesondere kann eine herkömmliche Borstenstopfmaschine verwendet werden, die für runde Borstenbüschel eingestellt sein kann. Dies vereinfacht den Herstellungsprozeß insofern als auf bereits vorhandene Ausrüstung zurückgegriffen wird. Die Büschelbefestigung kann mit höchster Geschwindigkeit erfolgen, es sind zum Beispiel bis zu 850 Borstenbüschel in der Minute möglich.

In vorteilhafter Weise können Borsten verwendet werden, die die Abnutzung zum Beispiel durch Verfärbung anzeigen. Solche Borsten liegen in der Regel nicht auf Spulen vor und könnten insoweit bei einer Befestigung mittels Eingießen oder Festschweißen nicht oder nur unter zusätzlichem Aufwand verwendet werden.

In vorteilhafter Weise können die langgestreckten Borstenbündel oder -büschel im Au-βenbereich der Zahnbürste so angeordnet sein, daß die Umhüllende im wesentlichen parallel zu der Kontur des Borstenträgers verläuft. Besonders bei oszillierenden/rotierenden Zahnbürsten wird das Verschleißverhalten bzw. Aufspleißen der Borstenbüschel deutlich reduziert. Des weiteren kann die Entfernung von Plaque im gingivalen Bereich gesteigert werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beiliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die Erfindung wird nachfolgend anhand bevorzugter Ausführungsbeispiele und zugehöriger Zeichnungen näher erläutert. In den Zeichnungen zeigen:
- Figur 1: eine perspektivische Ansicht eines Bürstenkopfs für eine elektrische Zahnbürste gemäß einer bevorzugten Ausführung der Erfindung in einer schematischen Darstellung,
- Figur 2: eine Draufsicht auf den Bürstenkopf aus Figur 1,
- Figur 3: einen Schnitt durch den Bürstenkopf der vorhergehenden Figuren entlang der Linie E-E in Figur 2,
- Figur 4: eine Detailansicht des Bürstenkopfs in einer Schnittdarstellung entlang der Linie A-A in Figur 2, die eine Querwand zur Unterteilung der langlochartigen Ausnehmungen zeigt, wobei Borsten in der Darstellung weggelassen sind,

- Figur 5: Draufsichten auf langlochartige Ausnehmungen für langgestreckte Borstenfelder in ausschnittsweisen Darstellungen, wobei die Ansichten a, b, c und d mögliche Varianten der Kontur der Ausnehmung zeigen,
- Figur 6: eine Querwand zur Unterteilung der langlochartigen Ausnehmungen des Bürstenkopfs gemäß den vorhergehenden Figuren im Querschnitt, wobei die Ansichten a, b und c verschiedene Querschnittsformen gemäß verschiedenen Ausführungen der Erfindungen zeigen,
- Figur 7: eine Draufsicht auf einen Bürstenkopf für eine elektrische Zahnbürste gemäß einer weiteren Ausführung der Erfindung, bei der Querwände zur Unterteilung der langlochartigen Ausnehmung integral einstückig in den Borstenträger eingearbeitet sind und äußere Segmente der langlochartigen Ausnehmung nach innen geneigt sind,
- Figur 8: einen Schnitt durch den Bürstenkopf aus Figur 7 entlang der Linie F-F,
- Figur 9: eine Draufsicht auf einen Bürstenkopf für eine elektrische Zahnbürste gemäß einer weiteren Ausführung der Erfindung, wobei Querwände zur Unterteilung der langlochartigen Ausnehmung integral in den Bürstenkopf eingearbeitet sind und einen sich keilförmig verjüngenden Querschnitt besitzen, selbstverständlich könnten auch Querwände gemäß Fig. 4 eingesetzt werden. Die langlochartigen Ausnehmungen erstrecken sich im wesentlichen parallel an die Außenkontur der Bürstenscheibe.
- Figur 10: einen Schnitt durch den Bürstenkopf aus Figur 9 entlang der Linie E-E in Figur 9, und
- Figur 11: eine Schnittansicht ähnlich Figur 10, die den Bürstenkopf mit eingesetzten Borstenbüscheln zeigt.

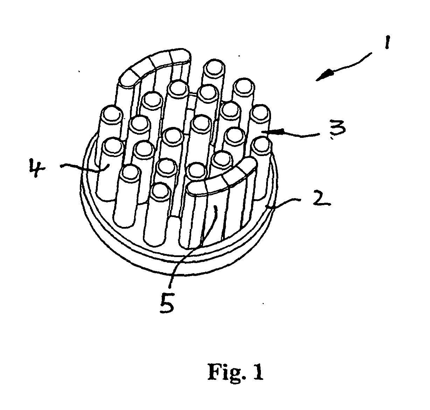

Der Bürstenkopf 1 gemäß der ersten Ausführung der Erfindung besitzt einen kreisplattenförmigen Bürstenträger 2, an dessen Flachseite eine Vielzahl von Borsten 3 jeweils zu Borstenbüscheln zusammengefaßt angeordnet sind. Wie Figur 1 zeigt, sind an dem Borstenträger 2 eine Vielzahl von singulären Borstenbüscheln 4 mit jeweils rundem Querschnitt sowie zwei langgestreckte Borstenbüschel 5 angeordnet.

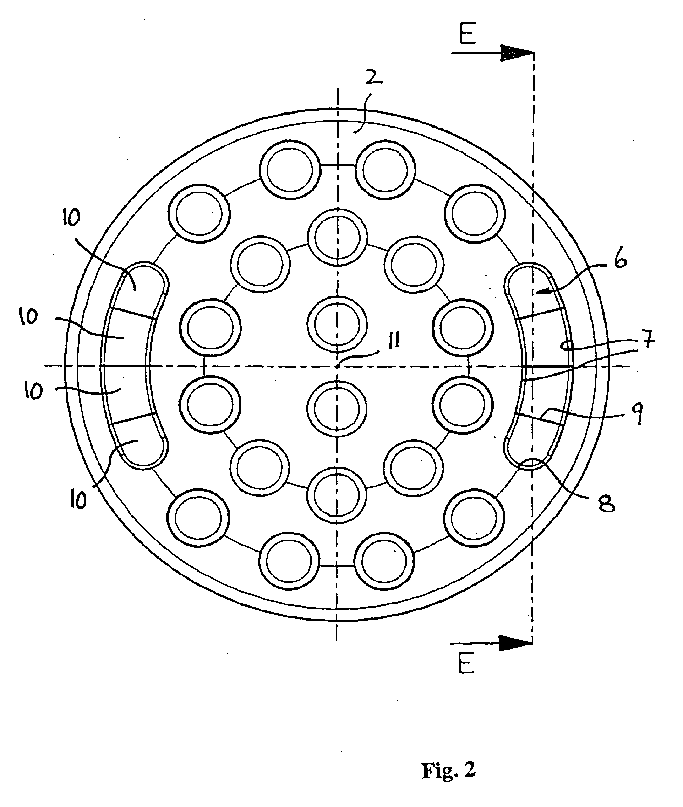

Die langgestreckten Borstenbüschel 5 besitzen jeweils eine bogenförmig gekrümmte Längsachse, die sich konzentrisch zur Mittelachse des kreisplattenförmigen Borstenträgers 2 erstreckt (vgl Figur 2).

Zur Befestigung jedes der beiden langgestreckten Borstenbüschel 5 ist eine langlochartige Ausnehmung 6 in dem Borstenträger 2 vorgesehen. Die langlochartige Ausnehmung 6 besitzt eine bogenförmig gekrümmte Längsachse, die sich konzentrisch zum Mittelpunkt des kreisplattenförmigen Borstenträgers 2 erstreckt. Dementsprechend erstreckt sich der langgestreckte Borstenbüschel 5 ebenfalls gekrümmt und konzentrisch um den Mittelpunkt des Borstenträgers 2.

Die langlochartige Ausnehmung 6 besitzt die Form einer Sacknut. Gegenüberliegende Seitenwände 7 erstrecken sich im wesentlichen parallel zueinander und parallel zur gekrümmten Längsachse der Ausnehmung 6. An den stirnseitigen Enden 8 der Ausnehmung 6 ist deren Wandung halbkreisförmig abgerundet (vgl Figur 2). Die Ausnehmung 6 ist durch drei Querwände 9 in vier Segmente 10 unterteilt, die jeweils etwa dieselbe Grundfläche besitzen. Die Querwände 9 erstrecken sich jeweils etwa senkrecht zur Längsachse der langlochartigen Ausnehmung 6. In der gezeigten Ausführung erstrecken sie sich dementsprechend radial zur Mittelachse 11 des Borstenträgers 2. Insbesondere für Rundkopfzahnbürsten können die Querwände aber auch einen Winkel bis zu ca. 30° zur Radialen zur Mittelachse aufweisen.

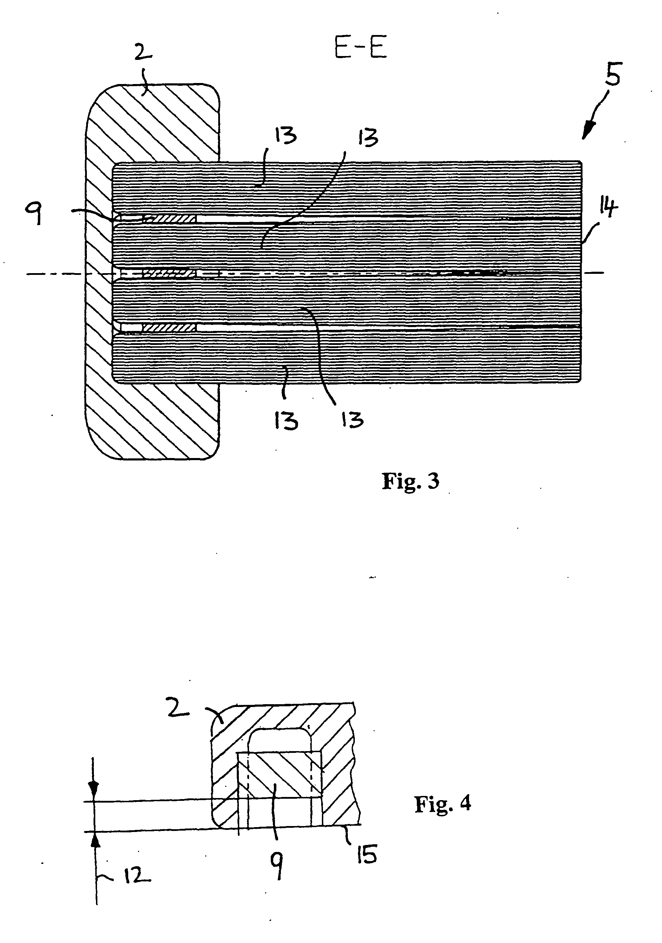

Als Querwände 9 sind dünne Metallplatten vorgesehen, wie sie als Anker zur Befestigung von Borsten im sogenannten Ankerstopfverfahren verwendet werden. Wie Figur 4 zeigt, sind die als Metallplatten ausgebildeten Querwände 9 in den Seitenwänden 7 der langlochartigen Ausnehmung 6 verankert. Der Borstenträger 2 ist aus Kunststoff spritzgegossen, so daß die Querwände 9, die etwas breiter als die langlochartige Ausnehmung 6 sind, in die Seitenwände 7 der Ausnehmung 6 eingeschlagen werden können und dort festgehalten werden. Wie Figur 4 zeigt, ist die Höhe der Querwände 9 geringer als die Tiefe der langlochartigen Ausnehmung 6. In der gezeigten Ausführung gemäß Figur 4 beträgt die Einschlagtiefe 12 der Oberkante der Querwand 9 etwa - grob gesprochen - ein Drittel der Tiefe der langlochartigen Ausnehmung 6, das heißt etwa das oberste Viertel bis Drittel der langlochartigen Ausnehmung 6 ist frei von Querwänden 9. Hierdurch kann ein dichtes und geschlossenes langgestrecktes Borstenbüschel erzielt werden, da die jeweiligen Borsten nur in den tieferliegenden Abschnitten der langlochartigen Ausnehmung 6 voneinander separiert werden.

Wie Figur 2 zeigt, erstrecken sich sowohl die Seitenwände 7 der langlochartigen Ausnehmung 6 als auch die Querwände 9 im wesentlichen senkrecht zur Oberfläche des Borstenträgers 2, an der die Borsten aus diesem austreten. Eine Neigung bzw. nicht senkrechte Anordnung kann auch realisiert werden (siehe z. B. Fig. 12).

In jedes der Segmente 10 wird ein separates Borstenbüschel 13 eingebracht. In vorteilhafter Weise werden die jeweiligen Borstenbüschel 13 im Ankerstopfverfahren in die Segmente 10 der langlochartigen Ausnehmung 6 eingebracht. Die Borsten eines jeden Borstenbüschels 13 werden um einen Ankerdraht bzw. eine Ankerplatte aus Metall, die nicht näher dargestellt sind, U-förmig gebogen, so daß die Ankerplatte zwischen den Schenkeln der U-förmig gebogenen Borsten zu liegen kommt und sich über den Verbindungsabschnitt der U-Schenkel erstreckt. Die U-förmig gebogenen Borstenbüschel werden zusammen mit den Ankerplatten in die Segmente eingeschossen, wobei die Ankerplatten in die Seitenwände 7 der langlochartigen Ausnehmung 6 eindringen, ähnlich dem zuvor bereits beschriebenen Einbringen der Querwände 9. Die Ankerplatten werden hierdurch in den Seitenwänden verankert und halten den Verbindungsabschnitt der U-förmig um die Ankerplatten gelegten Borstenbüschel auf dem Boden der langlochartigen Ausnehmung 6. Die Ankerplatten werden dabei symmetrisch zwischen zwei Querwänden 9 in das jeweilige Segment 10 bzw. symmetrisch zwischen der jeweils äußersten Querwand 9 und dem stirnseitigen Ende 8 der langlochartigen Ausnehmung 6 in das jeweilige Segment 10 eingebracht. Die Ankerplatten erstrecken sich im wesentlichen senkrecht zur Längsachse der langlochartigen Ausnehmung 6, das heißt, im wesentlichen radial zur Mittelachse 11 des Borstenträgers 2. Nach dem Befestigen der Borstenbüschel 13 können die Bosten an ihren freien Enden zugeschnitten bzw. abgerundet werden. Abweichende Winkel von der Senkrechten zur Längsachse der langlochartigen Ausnehmung 6 zur Verhinderung eines Durchbruches des Ankers auf der Außenseite des Borstenträgers 2, sind zulässig.

Wie Figur 3 zeigt, gehen die Borstenbüschel 13 zu ihren freien Enden 14 hin ineinander über. In ihren zu den freien Enden 14 hin liegenden Bereichen bilden die vier Borstenbüschel 13 einen einzigen, gemeinsamen langgestreckten Borstenbüschel 5, der eine, wie Figur 1 zeigt, glatte und geschlossene Außenkontur besitzt, die im wesentlichen der Kontur der langlochartigen Ausnehmung 6 entspricht.

In der gezeigten Ausführung gemäß Figur 3 sind die vier Borstenbüschel 13 gleich ausgebildet. Es können jedoch auch unterschiedliche Borstenbüschel zum Beispiel mit unterschiedlich langen, unterschiedlich harten oder, wie vorher erwähnt, sonstwie andersartig ausgebildeten Borsten gebildet werden. Zum Beispiel könnte die Anordnung kaskadenartig getroffen sein, so daß zum Beispiel die beiden mittleren Borstenbüschel 13 länger oder kürzer als die beiden außenliegenden Borstenbüschel 13 sind.

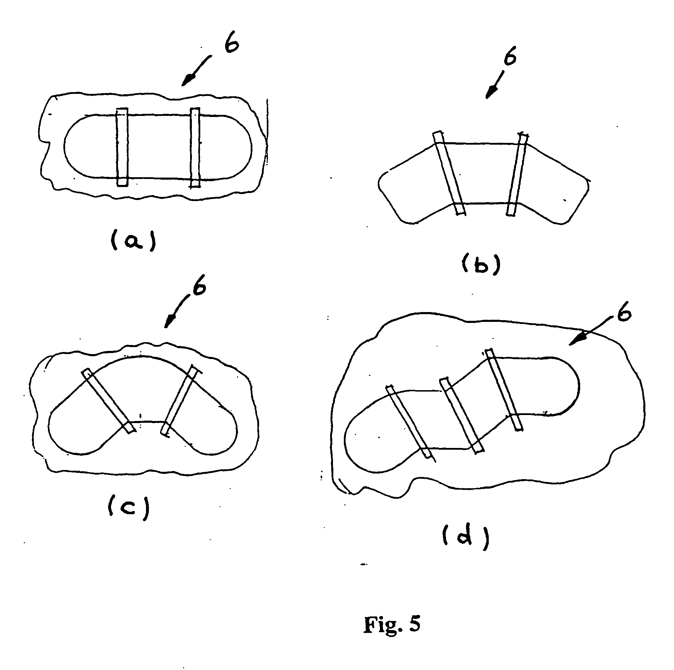

Die Kontur der langlochartigen Ausnehmung 6 ist nicht auf die in Figur 2 gezeigte beschränkt. Figur 5 zeigt Varianten möglicher Formen der langlochartigen Ausnehmung 6. Es können nahezu beliebige Konturen langgestreckter Borstenbüschel erreicht werden. Die in die einzelnen Segmente eingebrachten Borstenbüschel passen sich der Kontur des jeweiligen Segments an. Entsprechend der ineinander übergehenden Konturen der einzelnen Segmente wird ein einheitliches, geschlossenes Borstenbüschel mit einer glatten Außenkontur erreicht. Wie Figur 5 zeigt, werden die Querwände 9 vorzugsweise etwa so gesetzt, daß die Segmente ähnliche Querschnitte aufweisen. In einer Weiterbildung können die Querwände 9 im wesentlichen senkrecht zur jeweiligen Richtung der Längsachse der langlochartigen Ausnehmung 6 angeordnet werden. Vorzugsweise werden die Querwände 9 derart gesetzt, daß die sich ergebenden Segmente etwa dieselbe Grundfläche besitzen. Sie können jedoch auch derart gesetzt werden, daß die Flächen der Segmente 10 sich unterscheiden, zum Beispiel insbesondere um eine kaskadenartige Anordnung der Borsten innerhalb eines langgestreckten Borstenbüschels zu erreichen.

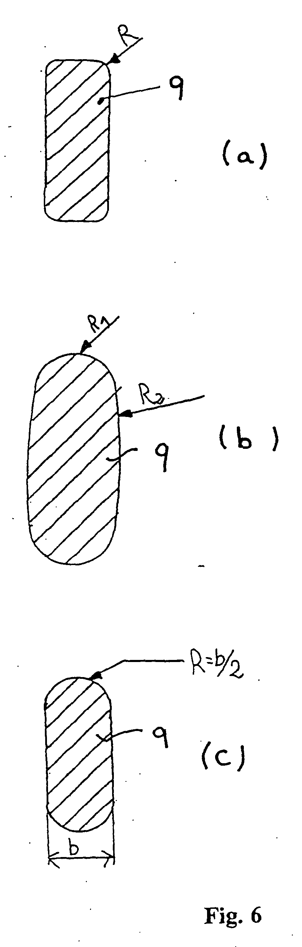

Um beim Einschießen der einzelnen Borstenbüschel 13 ein Abreißen der Borsten zu verhindern, ist die Oberkante der jeweiligen Querwand 9 vorzugsweise abgerundet. Wie Figur 6a zeigt, kann als Querwand ein Flachdraht mit gerundeten Kanten verwendet werden. Hierdurch wird auch ein Abscheuern der Borstenbüschel an den Kanten der Querwände 9 verhindert. Die Oberkante 15 der Querwände 9 können auch kuppelförmig verrundet sein, wie dies Figur 6c zeigt. Der Verrundungsradius entspricht dabei der halben Dicke der Querwand 9. Eine weitere bevorzugte Ausführung der Querwand 9 ist in Figur 6b gezeigt. Die Verrundung der Oberkante 15 geht in eine gewölbte Seitenfläche der Querwand 9 über, so daß die Querwand 9 insgesamt runde Querschnittskonturen besitzt. Die Querwand 9 kann elliptisch bzw. auch oval ausgebildet sein.

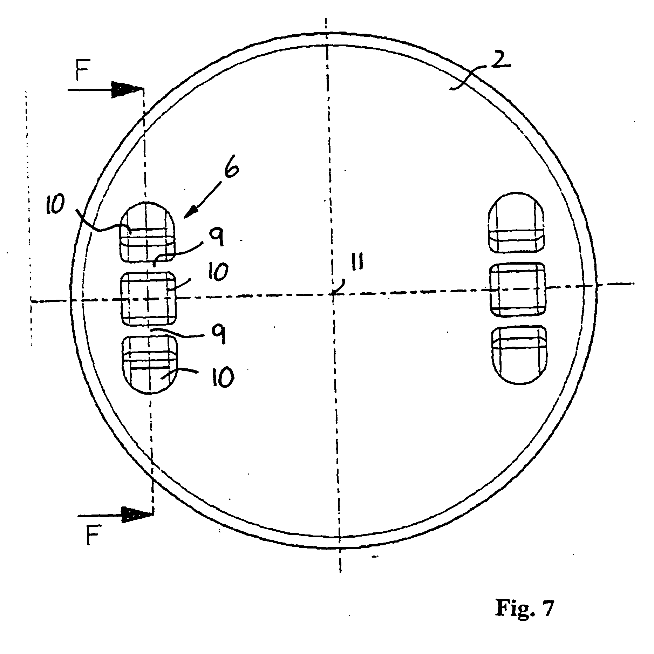

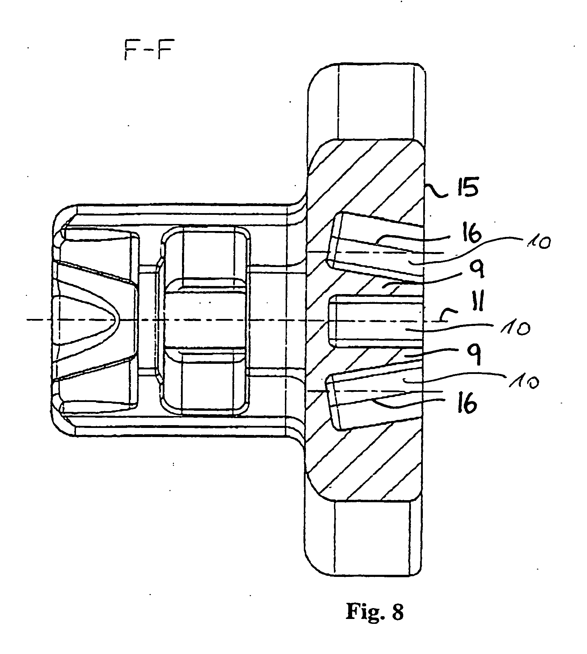

Eine weitere bevorzugte Ausführungsform eines erfindungsgemäßen Bürstenkopfes 1 mit Langlochbestopfung ist in den Figuren 7 und 8 gezeigt, wobei für entsprechende Teile entsprechende Bezugsziffern verwendet wurden. In dem ebenfalls kreisplattenförmigen Borstenträger 2 sind zwei langlochartige Ausnehmungen 6 eingearbeitet, deren Längsachse gerade ist und die zueinander symmetrisch bezüglich einer Ebene durch die Mittelachse 11 des Borstenträgers 2 angeordnet sind. Jede der langlochartigen Ausnehmungen 6 ist durch zwei Querwände 9 in drei Segmente 10 unterteilt. Die Realisierung des Langlochbündels kann aber in beliebigen Borstenträgerformen integriert werden und ist nicht auf symmetrische Anordnungen beschränkt.

Im Gegensatz zu der vorher beschriebenen Ausführungsform sind als Querwände 9 keine separaten, eingeschlagenen Metallplatten vorgesehen. Die Querwände 9 sind integral einstückig mit dem Borstenträger 2 ausgebildet und bestehen wie dieser aus spritzgegossenem Kunststoff. Die Querwände 9 können unmittelbar beim Spritzgußvorgang ausgebildet werden. Gegebenfalls können sie nachträglich eingearbeitet oder nachbearbeitet sein.

Wie Figur 8 zeigt, besitzen die beiden Querwände 9 einen sich vom Boden der langlochartigen Ausnehmung 6 zur Oberseite des Borstenträgers 2 hin keilförmig verjüngenden Querschnitt. Genauer gesagt, sind die Seiten der Querwände 9, die die Innenseiten der beiden äußeren Segmente 10 bilden, zur Senkrechten auf die Oberseite des Borstenträgers 2 geneigt, während die zu dem mittleren Segment 10 weisenden Seiten der Querwände 9 sich senkrecht zur Oberseite des Borstenträgers 2 erstrecken. Wie Figur 8 zeigt, sind die beiden äußeren Segmente 10 insgesamt geneigt angeordnet, das heißt auch die äußere Wandung an den stirnseitigen Enden 8 der langlochartigen Ausnehmung 6 sind nach innen hin geneigt. In entsprechender Weise ist der Boden der beiden äußeren Segmente 10 geneigt, so daß insgesamt die Achse 16 der äußeren Segmente 10 der langlochartigen Ausnehmung 6 nach innen hin zu dem mittleren Segment der Ausnehmung 6 geneigt sind. Dementsprechend sind die beiden äußeren Borstenbüschel, die in den beiden äußeren Segmenten 10 sitzen, zu dem mittleren Borstenbüschel hin geneigt, so daß die drei separaten Borstenbüschel ein einziges, gemeinsames langgestrecktes Borstenbüschel bilden, wie dies bei der zuvor gezeigten Ausführungsform der Fall ist. Bei der Realisierung des Borstenbüschels können selbstverständlich mehr als zwei oder drei Segmente und unterschiedliche Neigungswinkel verwendet werden.

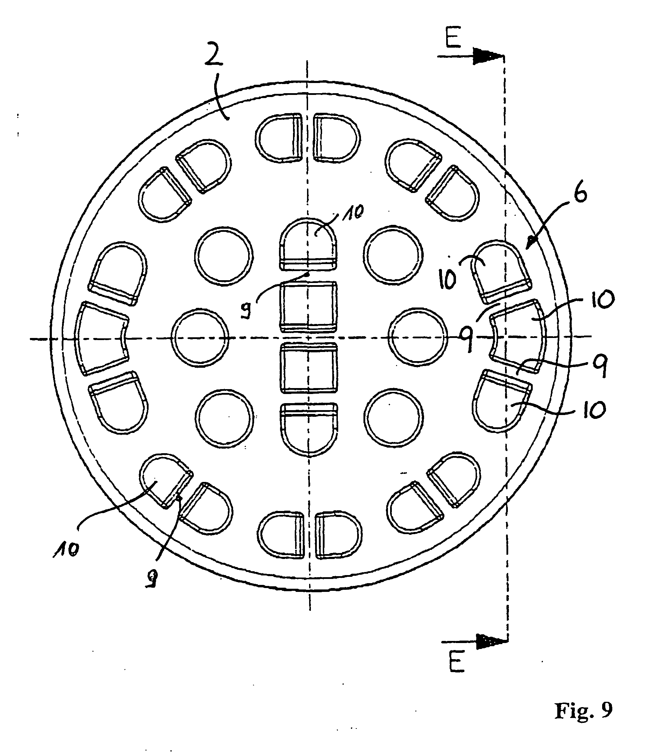

Eine weitere bevorzugte Ausführungsform eines erfindungsgemäßen Bürstenkopfs 1 zeigen die Figuren 9 bis 11. Der wie bei den vorherigen Ausführungsformen kreisplattenförmige Borstenträger 2 besitzt eine Mehrzahl von langlochartigen Ausnehmungen. Zwei gegenüberliegende langlochartige Ausnehmungen 6 besitzen eine beknickte Längsachse. Jede von ihnen ist durch zwei Querwände 9 in drei Segmente 10 unterteilt, wobei ein mittleres Segment 10 einen kreisbogenförmig geknickten Verlauf besitzt, während die beiden äußeren Segmente 10 eine geradlinige Längsachse besitzen (vgl Figur 9). Die Borstenbüschel, die für die Gingivalreinigung konzipiert sind, sind in zwei Segmente 10 mit einer Querwand 9 aufgeteilt.

Wie bei der zuvor beschriebenen Ausführung gemäß den Figuren 7 und 8 sind die Querwände 9 integral einstückig an den Borstenträger angeformt. Sie bestehen zusammen mit dem Borstenträger 2 aus spritzgegossenem Kunststoff und können gegebenenfalls nach dem Spritzgußvorgang nachbearbeitet worden sein.

Wie bei der zuvor beschriebenen Ausführungsform besitzen die Querwände 9 einen sich vom Boden der Ausnehmung 6 zur Oberseite des Borstenträgers 2 hin keilförmig verjüngenden Querschnitt. Insbesondere sind die die äußeren Segmente 10 begrenzenden Seiten der Querwände 9 geneigt zur Senkrechten auf die Oberseite des Borstenträgers 2, während die zu dem mittleren Segment 10 hin liegenden Seiten der Querwände 9 jeweils senkrecht auf die Oberseite des Borstenträgers 2 stehen. Im Gegensatz zu der Ausführung gemäß den Figuren 7 und 8 sind nur die Innenseiten der äußeren Segmente 10 geneigt, während die übrigen Wandungen der äußeren Segmente 10 senkrecht zur Oberseite des Borstenträgers 2 stehen. Bei dieser Ausführungsform lassen sich die äußeren Segmente 10 besonders einfach entformen, da die Neigung der Querwände 9 eine Entformungsschräge für die entsprechenden Spritzgußwerkzeuge bildet. Die Neigung der Querwände kann größer sein als dargestellt. Die Oberkante der Querwände kann bevorzugt unterhalb der Oberfläche der Bürstenscheibe oder -träger liegen. Dies verstärkt den Eindruck eines durchgehenden Langlochbüschels.

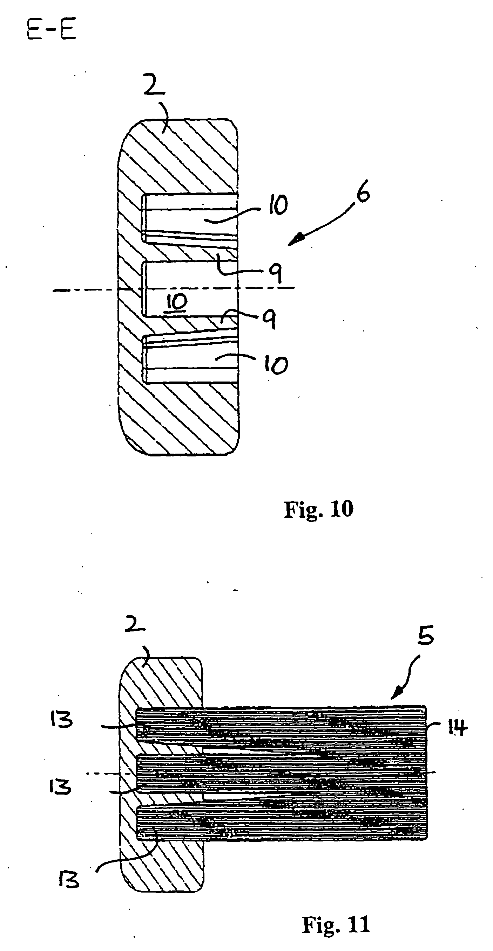

Wie Figur 11 zeigt, gehen die drei Borstenbüschel 13 zu ihren freien Enden 14 hin ineinander über, so daß sie gemeinsam ein einzelnes, langgestrecktes Borstenbüschel mit einer geschlossenen, glatten Außenkontur bilden, die im wesentlichen der Außenkontur der langlochartigen Ausnehmung 6 entspricht.

Selbstverständlich kann die Kontur der langlochartigen Ausnehmungen bei den beiden zuletzt beschriebenen Ausführungen zum Beispiel entsprechend den in Figur 5 gezeigten Varianten variiert werden. Dies gilt auch für die Geometrie der Borstenträger.

Folgende konstruktiven Ausgestaltungen der Erfindung erweisen sich als besonders vorteilhaft:

Die Ankertiefe 12 des Bürstenkopfes beträgt mehr als 20 %, insbesondere ca. 0,5 mm, der Lochtiefe der Ausnehmung 6. Die maximale Breite der Querwand 9, gemessen entlang der Längsachse der langlochartigen Ausnehmung 6, beträgt ca. 0,5 mm. Die Oberkante der Querwände 9 der langlochartigen Ausnehmung 6 liegt bevorzugt unterhalb der Oberfläche der Borstenträger 2. Die langgestreckten Ausnehmungen 6 sind im Außenbereich der Bürste angeordnet. Die langgestreckten Ausnehmungen verlaufen im wesentlichen parallel zur Außenkontur des Borstenträgers 2. Es werden langgestreckte Ausnehmungen 6 unterschiedlicher Größe oder Segmentzahl verwendet. Die Borstenbüschel 13 mit unterschiedlichen Borsteneigenschaften werden von Vorteil in einem Kaskadenverfahren in die jeweiligen Segmente eingebracht. Die Borstenbüschel 13 der einzelnen Segmente 10 der langgestreckten Ausnehmungen 6 weisen unterschiedliche Neigungen zur Senkrechten auf der Oberseite des Borstenträgers 2 auf. Die verwendeten Anker zur Fixierung der Borstenbündel 13 in den Segmenten 17 können identisch zu den plattenförmigen Ankern 9, die die Querwände 9 bilden, sein. Bevorzugt haben die Borstenbüschel 13 der einzelnen Segmente 10 einer langgestreckten Ausnehmung 6 zur senkrechten auf der Oberseite des Borstenträgers 2 unterschiedliche Neigungswinkel, insbesondere können die Borstenbüschel 13 in unterschiedliche Richtungen zu der Senkrechten auf dem Borstenträger 2 geneigt sein.

## Patentansprüche

1. Bürstenkopf, insbesondere Zahnbürstenkopf, mit einem Borstenträger (2) und daran festgelegten Borsten (3), wobei der Borstenträger (2) wenigstens eine langgestreckte Ausnehmung (6) aufweist, in der eine Vielzahl von Borsten aufgenommen sind, die ein langgestrecktes Borstenbüschel (8) mit einer Außenkontur bilden, die im wesentlichen der Kontur der langgestreckten Ausnehmung (6) entspricht, wobei die langgestreckte Ausnehmung (6) mittels zumindest einer Querwand (9) in mehrere Segmente (10) unterteilt ist, in jedem der Segmente (10) ein separates Borstenbüschel (13) sitzt, und die zumindest eine Querwand (9) integral einstückig mit dem Borstenträger (2) ausgebildet ist, vorzugsweise zusammen mit dem Borstenträger (2) aus spritzgegossenem Kunststoff besteht, **dadurch gekennzeichnet, daß** gegenüberliegende Seiten der zumindest einen Querwand (9) zueinander geneigt sind, derart, daß die in benachbarten Segmenten (10) sitzenden Borstenbüschel (13) mit ihren freien Enden (14) aufeinander zu geneigt sind, sodaß die separaten Borstenbüschel (13) ineinander übergehen und gemeinsam das langgestreckte Borstenbüschel (5) mit im wesentlichen geschlossener und/oder glatter Außenkontur bilden.

2. Bürstenkopf nach dem vorhergehenden Anspruch, wobei die Borsten (3) eines jeden separaten Borstenbüschels (13) U-förmig in dem jeweiligen Segment (17) sitzen und von einem in dem jeweiligen Segment (10) verankerten, insbesondere plattenförmigen Anker gehalten sind, der sich zwischen den Schenkeln der U-förmig gebogenen Borsten über deren Verbindungsabschnitte erstreckt.

3. Bürstenkopf nach dem vorhergehenden Anspruch, wobei sich die Anker im wesentlichen quer zur Längsachse der langlochartigen Ausnehmung (6) erstrecken, vorzugsweise zur jeweils benachbarten Querwand (9) einen Winkel von weniger als 30 Grad einschließen.

4. Bürstenkopf nach einem der vorhergehenden Ansprüche, wobei eine Oberkante (15) der Querwand (9) abgerundet ist und/oder die Querwand (9) einen ovalen und/oder elliptischen Querschnitt besitzt.

5. Bürstenkopf nach einem der vorhergehenden Ansprüche, wobei stirnseitige Wände (8) der Ausnehmung (6), vorzugsweise die zugehörigen stirnseitig äußeren Segmente (10) insgesamt nach innen zur Mitte der Ausnehmung (6) hin geneigt angeordnet sind.

6. Bürstenkopf nach einem der vorhergehenden Ansprüche, wobei die Segmente (10) im wesentlichen dieselbe Grundfläche besitzen.

7. Bürstenkopf nach einem der Ansprüche 1 bis 10, wobei die Segmente (10) verschiedene Grundflächen besitzen und in einem Kaskadenprozeß bestopft werden.

8. Bürstenkopf nach einem der vorhergehenden Ansprüche, wobei in den verschiedenen Segmenten (10) Borsten unterschiedlicher Eigenschaften sitzen.

9. Bürstenkopf nach einem der vorhergehenden Ansprüche, wobei die Segmente (10) eine von einem Kreis verschiedene Kontur, insbesondere eine im wesentlichen eckige Kontur mit zumindest zwei parallelen Seiten aufweisen.

10. Verfahren zur Herstellung eines Bürstenkopfs (1) nach einem der vorhergehenden Ansprüche, bei dem ein Borstenträger (2) bereitgestellt wird und eine Vielzahl von Borsten (3) an diesem befestigt werden, wobei in dem Borstenträger mindestens eine langgestreckte Ausnehmung (6) mit zumindest einer Querwand (9), die die Ausnehmung in mehrere Segmente (20) unterteilt, ausgebildet wird und in jedes Segment (10) ein separates Borstenbüschel (13) eingebracht wird, wobei die zumindest eine Querwand (9) derart geformt wird, daß die separaten Borstenbüschel (13) gemeinsam ein langgestrecktes Borstenbüschel mit einer Außenkontur bilden, die im wesentlichen der Kontur der langgestreckten Ausnehmung (6) entspricht, wobei die zumindest eine Querwand (9) integral an den Borstenträger (2) angeformt, vorzugsweise aus Kunststoff spritzgegossen und/oder durch formgebende Bearbeitung des Borstenträgers (2) ausgebildet wird, **dadurch gekennzeichnet, daß** die zumindest eine Querwand (9) derart geformt wird, daß gegenüberliegende Seiten der zumindest einen Querwand (9) zueinander geneigt sind, derart, daß die in benachbarten Segmenten (10) sitzenden Borstenbüschel (13) mit ihren freien Enden (14) aufeinander zu geneigt sind, sodaß die separaten Borstenbüschel (13) ineinander übergehen und gemeinsam das langgestreckte Borstenbüschel (5) mit im wesentlichen geschlossener und/oder glatter Außenkontur bilden.

11. Verfahren nach Anspruch 10, **dadurch gekennzeichnet, daß** die Borsten (3) eines jeden Borstenbüschels (13) U-förmig umgebogen, in der U-Form in das jeweilige Segment gestopft und dort mit einem Anker verankert werden, insbesondere jedes Borstenbüschel (13) im wesentlichen U-förmig oberhalb des Borstenträgers (2) positioniert und mit dem Metallanker in dem jeweiligen Segment (10) verankert wird.

12. Verfahren nach einem der Ansprüche 10 bis 11, wobei eine stirnseitige Wand (8) der Ausnehmung (6) derart geformt wird, daß sie nach innen zur Mitte der Ausnehmung (6) hin geneigt ist.

13. Verfahren nach einem der vorhergehenden Ansprüche 10 bis 12, wobei die Borstenbüschel (13) mit einer Borstenstopfmaschine zum Einbringen im wesentlichen kreisförmiger Borstenbüschel in die jeweiligen Segmente (10) eingebracht werden.

## Claims

1. A brush head, particularly a toothbrush head, having a bristle support (2) and bristles (3) fixed to thereto, wherein the bristle support (2) has at least one elongated recess (6) in which a plurality of bristles are accommodated which plurality of bristles form an elongated bristle tuft (8) having an outer contour that essentially corresponds to the contour of the elongated recess (6), wherein the elongated recess (6) is divided into multiple segments (10) by means of at least one transverse wall (9), each of the segments (10) accommodating a separate bristle tuft (13), and the at least one transverse wall (9) is formed in an integral unit construction with the bristle support (2), wherein preferably the wall (9) and bristle support (2) are both made of injection-molded plastic material, **characterized in that** opposite sides of the at least one transverse wall (9) are inclined with respect to each other, such that the bristle tufts (13) which sit in neighboring segments (10) have their free ends (14) inclined with respect to each other, so that the separate bristle tufts (13) merge and together form the elongated bristle tuft (5) with an essentially closed and/or smooth outer contour.

2. The brush head according the preceding claim, wherein the bristles (3) of each separate bristle tuft (13) sit in a U-shaped configuration in the respective segment (17) and are held by an anchor, in particular a plate-shaped anchor, which itself is anchored in the given segment (10), which anchor is disposed between the legs of the bristles bent into a U-shaped configuration and over the binding segment of the bristles.

3. The brush head according to the preceding claim, wherein the anchors extend essentially transversely to the longitudinal axis of the elongated recess (6), preferably forming an angle of less than 30 degrees with respect to the respective neighboring transverse wall (9).

4. The brush head according to one of the preceding claims, wherein an upper edge (15) of the transverse wall (9) is rounded and/or the transverse wall (9) has an oval and/or elliptical cross section.

5. The brush head according to one of the preceding claims, wherein the end walls (8) of the recess (6), preferably the associated endmost segments (10) as a whole, are inclined inward toward the center of the recess (6).

6. The brush head according to one of the preceding claims, wherein the segments (10) have essentially the same base area.

7. The brush head according to one of claims 1 to 10, wherein the segments (10) have different base areas and are filled in a cascade process.

8. The brush head according to one of the preceding claims, wherein bristles having different characteristics sit in different segments (10).

9. The brush head according to one of the preceding claims, wherein the segments (10) have a contour different from a circle, in particular an essentially angular contour which has at least two parallel sides.

10. Method of manufacturing a brush head (1) according to one of the preceding claims, by which a bristle support (2) is provided and a plurality of bristles (3) are fixed to it, wherein at least one elongated recess (6) with at least one transverse wall (9) is formed, which transverse wall (9) divides the recess into multiple segments (20), and a separate bristle tuft (13) is inserted in each segment (10), wherein the at least one transverse wall (9) is formed such that the separate bristle tufts (13) together form an elongated bristle tuft with an outer contour that essentially corresponds to the contour of the elongated recess (6), wherein the at least one transverse wall (9) is formed in an integral unit construction with the bristle support (2), and is preferably made of injection-molded plastic and/or is formed by a bristle support (2) forming process, **characterized in that** the at least one transverse wall (9) is formed such that opposite sides of the at least one transverse wall (9) are inclined with respect to each other, such that the bristle tufts (13) sitting in neighboring segments (10) are inclined toward each other with their free ends (14), so that the separate bristle tufts (13) merge and together form the elongated bristle tuft (5) having an essentially closed and/or smooth contour.

11. The method according to claim 10, **characterized in that** the bristles (3) of each of the bristle tufts (13) are bent into a U-shape in which they are inserted into the respective segment and are anchored there by an anchor, **in that** in particular each bristle tuft (13) in an essentially U-shaped configuration is positioned above the bristle support (2) and is anchored with the metal anchor in the respective segment (10).

12. The method according to one of claims 10 to 11, wherein an end wall (8) of the recess (6) is formed such that it is inclined inward toward the center of the recess (6).

13. The method according to one of the preceding claims 10 to 12, wherein the bristle tufts (13) are inserted into the respective segments (10) with the use of a bristle-inserting machine for installing essentially circular bristle tufts.

## Revendications

1. Tête de brosse, en particulier tête de brosse à dents, comprenant un support de poils (2) et des poils (3) fixés dessus, le support de poils (2) présentant au moins un évidement oblong (6) dans lequel sont logés une multitude de poils, qui forment une touffe de poils allongée (8) ayant un contour extérieur qui correspond sensiblement au contour de l'évidement oblong (6), l'évidement oblong (6) étant subdivisé en plusieurs segments (10) à l'aide d'au moins une paroi transversale (9), chacun des segments (10) incluant une touffe de poils séparée (13), et la au moins une paroi transversale (9) étant conçue d'un seul tenant avec le support de poils (2), de préférence étant réalisée en plastique moulé par injection avec le support de poils (2), **caractérisé en ce que** des côtés opposés de la au moins une paroi transversale (9) sont inclinés les uns vers les autres, de telle sorte que les touffes de poils (13) reposant dans des segments (10) voisins sont inclinées avec leurs extrémités (14) libres les unes vers les autres, si bien que les touffes de poils séparées (13) se raccordent les unes aux autres et forment ensemble la touffe de poils allongée (5) avec un contour extérieur sensiblement fermé et/ou lisse.

2. Tête de brosse selon la revendication précédente, dans laquelle les poils (3) de chaque touffe de poils (13) séparée sont logés en forme de U dans le segment (17) concerné et sont maintenus par un dispositif d'ancrage fixé dans le segment (10) concerné, en particulier en forme de plaque, qui s'étend entre les branches des poils pliés en U sur leurs tronçons de liaison.

3. Tête de brosse selon la revendication précédente, dans laquelle les dispositifs d'ancrage s'étendent sensiblement transversalement à l'axe longitudinal de l'évidement de type trou oblong (6), de préférence décrivent un angle de moins de 30 degrés par rapport à la paroi transversale (9) adjacente concernée.

4. Tête de brosse selon l'une des revendications précédentes, dans laquelle une arête supérieure (15) de la paroi transversale (9) est arrondie et/ou la paroi transversale (9) possède une section ovale et/ou elliptique.

5. Tête de brosse selon l'une des revendications précédentes, dans laquelle des parois (8) côté frontal de l'évidement (6), de préférence les segments (10) extérieurs côté frontal correspondants sont disposés globalement inclinés vers l'intérieur en direction du centre de l'évidement (6).

6. Tête de brosse selon l'une des revendications précédentes, dans laquelle les segments (10) possèdent sensiblement la même surface de base.

7. Tête de brosse selon l'une des revendications 1 à 10, dans laquelle les segments (10) présentent différentes surfaces de base et sont dans un processus de cascade.

8. Tête de brosse selon l'une des revendications précédentes, dans laquelle les différents segments contiennent (10) des poils de différentes propriétés.

9. Tête de brosse selon l'une des revendications précédentes, dans laquelle les segments (10) présentent un contour différent d'un cercle, en particulier un contour sensiblement anguleux avec au moins deux côtés parallèles.

10. Procédé de fabrication d'une tête de brosse (1) selon l'une des revendications précédentes, dans lequel un support de poils (2) est fourni et une multitude de poils (3) sont fixés à celui-ci, le support de poils présentant au moins un évidement oblong (6) doté d'au moins une paroi transversale (9) qui subdivise l'évidement en plusieurs segments (20), et chaque segment (10) accueillant une touffe de poils séparée (13), la au moins une paroi transversale (9) étant formée de telle sorte que les touffes de poils séparées (13) forment ensemble une touffe de poils allongée présentant un contour extérieur qui correspond sensiblement au contour de l'évidement oblong (6), la au moins une paroi transversale (9) étant formée d'un seul tenant avec le support de poils (2), de préférence moulée par injection en plastique et/ou conçue par façonnage du support de poils (2), **caractérisé en ce que** la au moins une paroi transversale (9) est formée de telle façon que des côtés opposés de la au moins une paroi transversale (9) sont inclinés les uns vers les autres, de telle sorte que les touffes de poils (13) reposant dans des segments (10) voisins sont inclinées avec leurs extrémités (14) libres les unes vers les autres, si bien que les touffes de poils séparées (13) se raccordent les unes aux autres et forment ensemble la touffe de poils allongée (5) avec un contour extérieur sensiblement fermé et/ou lisse.

11. Procédé selon la revendication 10, **caractérisé en ce que** les poils (3) de chaque touffe de poils (13) sont pliés en forme de U, sont bourrés dans la forme en U dans le segment concerné et ancrés à cet endroit avec un dispositif d'ancrage, en particulier chaque touffe de poils (13) est positionnée sensiblement en forme de U au-dessus du support de poils (2) et est ancrée avec le dispositif d'ancrage métallique dans le segment (10) concerné.

12. Procédé selon l'une des revendications 10 à 11, dans lequel une paroi (8) côté frontal de l'évidement (6) est formée de telle sorte qu'elle est inclinée vers l'intérieur en direction du centre de l'évidement (6).

13. Procédé selon l'une des revendications 10 à 12, dans lequel les touffes de poils (13) sont introduites avec une machine de bourrage de poils pour l'introduction de touffes de poils sensiblement de forme circulaire dans les segments (10) concernés.
